# EUROPÄISCHE PATENTANMELDUNG

(11) **EP 4 236 088 A1**
(43) Veröffentlichungstag der Anmeldung: **30.08.2023**
(21) Anmeldenummer: 22158583.9
(22) Anmeldetag: 24.02.2022
(51) Int. Cl.: H04B 3/54, H04B 11/00

(54) **VERFAHREN UND SYSTEM ZUR DATENÜBERTRAGUNG AUF ELEKTRISCHEN LEITUNGEN**

(71) Anmelder: FRONIUS INTERNATIONAL GmbH, 4643 Pettenbach (AT)
(72) Erfinder: Fasthuber, Christian, 4600 Wels-Thalheim (AT)
(74) Vertreter: Patentanwälte Pinter & Weiss OG

(57) **Zusammenfassung**

Die Erfindung betrifft ein Verfahren zur Datenübertragung auf elektrischen Leitungen sowie ein zugehöriges System. Dabei werden eine Stromquelle (SQ) und zumindest eine Stromsenke (SE) durch eine elektrische Leitung (L) verbunden, über welche elektrische Energie (EP) zwischen der Stromquelle (SQ) und der zumindest einen Stromsenke (SE) übertragen wird. Die elektrische Leitung (L) wird zusätzlich für eine Datenübertragung zwischen der Stromquelle (SQ) und der zumindest einen Stromsenke (SE) verwendet. Dazu wird für eine Übertragung von Daten (D) zwischen der Stromquelle (SQ) und der zumindest einen Stromsenke (SE) zumindest eine Schallwelle (SW) von einer senderseitigen Koppeleinheit (K1) in die elektrische Leitung eingekoppelt (101). Die zumindest eine Schallwelle (SW) wird dann mindestens teilweise zeitgleich zur übertragenen, elektrischen Energie (EP) bzw. zumindest teilweise in einem selben Zeitintervall wie die übertragene, elektrische Energie (EP) in der elektrischen Leitung (L) übertragen (102). Empfängerseitig wird die zumindest eine Schallwelle (SW) von einer empfängerseitigen Koppeleinheit (K2) aus der elektrischen Leitung (L) ausgekoppelt und die übertragenen Daten (D) werden aus der zumindest einen Schallwelle (SW) zurückgewonnen (103).

## Beschreibung

### Technisches Gebiet

Die gegenständliche Erfindung betrifft ein Verfahren, sowie ein System, zur Datenübertragung auf elektrischen Leitungen. Dabei wird über eine elektrische Leitung elektrische Energie zwischen einer Stromquelle, wie z.B. Schweißstromquelle, Photovoltaik-Modul, Batterieladegerät, etc., und zumindest einer Stromsenke, wie z.B. Schweißgerät, Schweißkomponente, Wechselrichter, Batterieeinheit, etc., übertragen. Zusätzlich zur Übertragung der elektrischen Energie wird die elektrische Leitung auch für eine Datenübertragung bzw. einen Datenaustausch zwischen der Stromquelle und der zumindest einen Stromsenke verwendet.

### Stand der Technik

Üblicherweise wird in vielen elektrotechnischen Anlagen elektrische Energie von einer Energie- bzw. Stromquelle bereitgestellt und über eine elektrische Leitung zu einer Stromsenke bzw. zu einem elektrischen Verbraucher übertragen. Dabei wird unter einer elektrischen Leitung ein Gegenstand oder System zum Transport von elektrischer Energie zwischen der Stromquelle und der Stromsenke verstanden. Eine elektrische Leitung ist dabei Teil eines Stromkreises bzw. eines Stromnetzes und verbindet Stromquelle und Stromsenke. Unter elektrischen Leitungen können beispielsweise elektrische Leiter in Form von Drähten oder Litzen, Kabel (d.h. isolierte Leiter) sowie andere üblicherweise niederohmige, leitende Verbindungen, welche zur Übertragung elektrischer Energie geeignet sind, wie z.B. elektrische Verbindungen zwischen auf einer Leiterplatte angeordneten, elektrischen Bauelementen (z.B. Widerstände, Induktivitäten, Kapazitäten, Dioden, Transistoren, integrierte Schaltungen), verstanden werden.

Nicht selten ist zusätzlich bzw. neben der Übertragung der elektrischen Energie auch ein Austausch von Informationen (z.B. Daten, Signalen, Steuer- und/oder Regelinformationen, etc.) zwischen der Stromquelle und der Stromsenke notwendig. Dazu können beispielsweise Sende- bzw. Empfangseinheiten der Stromquelle und der Stromsenke zugeordnet oder in die Stromquelle und Stromsenke integriert sein. Der Informationsaustausch zwischen der Sende- bzw. Empfangseinheit der Stromquelle und der Sende- bzw. Empfangseinheit der Stromsenke wird z.B. über eine separate Datenleitung (z.B. Datenkabel, Draht, Lichtwellenleiter, etc.) durchgeführt. Eine derartige Vorgehensweise ist allerdings mit einem erhöhten Arbeits- und/oder Materialaufwand verbunden. Weiterhin können bei Verwendung insbesondere von ungeschirmten Datenkabeln oder Drahtleitungen für die Datenübertragung Beeinflussungen und Störungen durch die für die Energieübertragung genutzte, elektrische Leitung auftreten.

Die zusätzliche Datenleitung kann beispielsweise auch als optischer Leiter (z.B. Lichtwellenleiter) ausgeführt sein, welcher parallel zur elektrischen Leitung angeordnet ist. Dabei wird beispielsweise die elektrische Leitung für die Energieübertragung und der optische Leiter für die Datenübertragung, z.B. in Form von Lichtsignalen zwischen Stromquelle und Stromsenke, verwendet. Bei Verwendung eines optischen Leiters bzw. Lichtwellenleiters beeinflusst üblicherweise die in der elektrischen Leitung übertragene elektrische Energie - im Gegensatz zur Verwendung eines Datenkabels bzw. Drahts - die Datenübertragung im optischen Leiter kaum bis gar nicht. Allerdings wird auch hier für die Datenübertragung ein Leiter (z.B. Lichtwellenleiter) zusätzlich zur elektrischen Leitung benötigt, was mit zusätzlichem Aufwand und Kosten verbunden ist. Weiterhin weisen beispielsweise Lichtwellenleiter üblicherweise eine geringere mechanische Stabilität und Strapazierfähigkeit auf als z.B. elektrische Leitungen oder Datenkabel. Dadurch kann es vor allem bei raueren Umgebungsbedingungen (z.B. Produktionsbereiche, Betriebshallen, etc.) und/oder Betriebsbedingungen leicht zu einer Beschädigung und/oder Zerstörung des optischen Leiters kommen und die Datenübertragung erheblich gestört werden.

Anstatt zusätzlicher Datenleitungen oder optischer Leiter können z.B. zumindest teilweise auch drahtlose Kommunikationssystem für den Informationsaustausch bzw. zur Datenübertragung zwischen Stromquellen und Stromsenken zum Einsatz kommen. Allerdings funktioniert drahtlose Kommunikation im industriellen Umfeld z.B. aufgrund von Funkschatten, elektromagnetischen Störungen, teilweiser Abschottung, etc. nicht immer fehlerfrei und ist nicht selten mit erhöhtem Aufwand für Sende- und Empfangseinheiten verbunden. So kann in Anwendungsgebieten, wie z.B. dem Schiffbau, eine drahtlose Versorgung beispielsweise mittels WLAN aufgrund einer Abschottung nur mit relativ hohem bzw. zusätzlichem Aufwand, insbesondere bei Sende- und Empfangseinheiten, gewährleistet werden.

Es ist daher wünschenswert, bereits vorhandene Leitungen bzw. Verbindungen, welche zur Übertragung elektrischer Energie verwendet werden, auch für die Datenübertragung zu nutzen. Eine Möglichkeit, energieübertragende Leitungen auch zum Datenaustausch zwischen zwei Einheiten (z.B. Stromquellen, Verbraucher, etc.), welche über diese Leitungen verbunden sind, einzusetzen, stellt beispielsweise Powerline Communication oder kurz: PLC dar. Dabei werden vorhandene elektrische Leitungen, vor allem Kabelverbindungen im Niederspannungsbereich, für einen Aufbau eines lokalen Netzwerks zur Datenübertragung genutzt, so dass keine zusätzliche Verkabelung - z.B. mit zusätzlichen Datenkabeln - notwendig ist. Beispiele dafür sind in verschiedenen Standards, wie z.B. HomeplugAV und HomeplugAV2 der Homeplug Alliance, IEEE 1901 sowie ITU G.hn und ITU G.9955, definiert. Dabei wird ein Datensignal eines mit dem Stromnetz verbundenen Geräts von einer entsprechenden Sendeeinheit im Hochfrequenzbereich auf die energieübertragende Leitung moduliert und zu einem Empfänger übertragen. Empfängerseitig wird das aufmodulierte Datensignal mittels Demodulation wieder zurückgewonnen und ausgewertet. Gängige PLC-Protokolle kommen beispielsweise bei Anwendungen, wie z.B. im privaten Bereich zum Aufbau eines Local Area Networks (LAN) oder für einen Internet-Zugang über das Stromnetz oder z.B. im Bereich der Hausautomation zur Fernsteuerung von verschiedenen Einrichtungen (z.B. Licht, Beschattungseinrichtungen, etc.) zum Einsatz. PLC kann aber auch im industriellen Umfeld eingesetzt werden, beispielsweise für eine Fernabfrage von Sensor- oder Messeinheiten (z.B. Smart Meter, etc.) oder für eine Fernsteuerung von industriellen Geräten oder Anlagen. Dazu ist beispielsweise aus der Schrift US 10,758,994 B2 eine Fernsteuerung eines Schweißgeräts bekannt, bei welchem Steuerbefehle und Informationen mit Betriebsparametern für den Schweißprozesses zwischen der versorgenden Stromquelle und dem Schweißgerät, vor allem einem Drahtvorschub, über ein Schweißkabel übertragen werden. Dabei werden zur Steuerung der Datenübertragung sender- wie empfängerseitig PLC-Transceiver verwendet.

Aufgrund der Übertragung im hochfrequenten Bereich, welche meist mit hohen Signalpegeln erfolgt, kann es bei einer Verwendung von PLC zur Datenübertragung zu Störungen kommen. Da bei energieübertragenden Leitungen, insbesondere energieübertragenden Leitern oder Kabeln, meist keine Abschirmung vorgesehen ist, können für PLC genutzte, elektrische Leitungen Signale in die Umgebung abstrahlen und zu Störungen von Anwendungen im selben Frequenzband führen. Weiterhin kann es vor allem bei Anordnungen mit mehreren energieübertragenden, nebeneinander befindlichen Leitungen, wie z.B. bei mehradrigen Kabeln, Doppelleitungen, etc., oder nebeneinander angeordneten elektrischen Verbindungen zum so genannten Übersprechen kommen. D.h. das auf einer Leitung übertragene Datensignal koppelt auf benachbarten Leitungen ein und kann eine dort ablaufende Datenkommunikation stark beeinträchtigen oder sogar verunmöglichen. Störungen, wie z.B. Übersprechen, beeinflussen beispielsweise bei benachbarter Verwendung von mehreren Schweißgeräten die Datenübertragung zwischen Schweißstromquelle und Drahtvorschub negativ - so kann z.B. Datenrate und Robustheit der Übertragung stark beeinträchtigen sein. Ebenso können Abstrahlung und Übersprechen Probleme bei der Datenübertragung in Photovoltaikanlagen verursachen, insbesondere in Anlagen, in welchen mehrere Photovoltaikmodule über benachbarte Leitungen in einen gemeinsamen DC-Bus einspeisen. Auch bei einer Datenkommunikation zwischen einem Ladegerät und einem oder mehreren Batteriemodulen über das Versorgungskabel können Störungen wie z.B. Übersprechen zu Problemen bei der Übertragung von Daten führen.

Neben Störungen, welche z.B. durch Abstrahlung und/oder Übersprechen zwischen Leitungen, vor allem bei Datenübertragung auf elektrischen Leitungen in hohen Frequenzbereichen, verursacht werden, kann die Datenübertragung auf energieübertragenden Leitungen weiterhin durch Dämpfungseffekte in den Leitungen sowie durch Störeinflüsse von an die Leitungen angeschlossenen Geräten negativ beeinflusst werden. Vor allem Schwankungen in der auf einer Leitung übertragenen Energie, stark wechselnde Impedanzen, etc., welche durch angeschlossene Geräte (z.B. Netzteile, Vorschaltgeräte, etc.) verursacht werden, aber auch hohe, auf der Leitung übertragene Ströme können die Datenübertragung negativ beeinflussen und für eine stark reduzierte Datenrate sorgen. Bei industriellen Prozessen können die Prozesse selbst ein hohes Störpotential aufweisen.

So kann beispielsweise ein Schweißprozess durch Zünden des Lichtbogens, durch Verwendung eines impulsförmigen Stroms, wobei Stromstärke und Spannung beispielsweise zwischen einem niedrigen Grundwert und einem höheren Impulswert wechseln oder durch Stoppen starke Störungen auf der elektrischen Leitung verursachen und Stabilität sowie Datendurchsatz der Datenübertragung in der Leitung stark beeinflussen. Weiterhin kann es beispielsweise auch bei Ladeverfahren, bei welchen Strom und Spannung beim Aufladen von Batteriemodulen durch ein Ladegerät gesteuert wird, oder in Photovoltaikanlagen neben Übersprechen und Abstrahlung zu Störeinflüssen auf die Datenübertragung direkt auf der Leitung kommen.

Eine weitere Möglichkeit energietransportierende Leitungen insbesondere bei Schweißsystemen, zur Datenübertragung zu nutzen, ist beispielsweise aus der Schrift EP 3 221 080 B1 bekannt, welche ein Verfahren zur Kommunikation zwischen zumindest zwei Komponenten eines Schweißsystems (z.B. Stromversorgung, Drahtvorschub, Zusatzeinheiten, etc.) über ein Schweißkabel beschreibt. Dabei werden senderseitig von einer Sende- und Empfangsschaltung, welche über ein Steuerkabel mit einer Komponente des Schweißsystems (z.B. Stromversorgung) kommunikativ verbunden ist, zu übertragende digitale Daten in ein Stromsignal mit einer vorgegebenen Frequenz umgewandelt und mittels eines Kopplungstransformators in das Schweißkabel eingekoppelt. Empfängerseitig wird das Stromsignal mittels eines Kopplungstransformators von einer Sende- und Empfangsschaltung, welche mit einer weiteren Komponente des Schweißsystems (z.B. Drahtvorschub) kommunikativ verbunden ist, ausgekoppelt, um die Daten aus dem Stromsignal zurückzugewinnen. Die Kopplungstransformatoren weisen dabei mechanische Klammern auf, welche auf das Schweißkabel geklemmt werden und dieses umschließen. Allerdings erfolgt auch bei dem in der Schrift EP 3 221 080 B1 beschriebenen Verfahren der Datenaustausch auf dem Schweißkabel in einem höheren Frequenzbereich (z.B. 100 kHz oder höher). Zusätzlich wird das übertragene Stromsignal noch vor der Übertragung verstärkt, wodurch auch bei diesem Verfahren Störungen, wie z.B. Abstrahlung, Übersprechen auf weitere datenübertragende Leitungen, etc., auftreten und Datenrate und Robustheit der Übertragung beeinträchtigen können.

Um beispielsweise Übersprechen auf benachbarte Leitungen zu vermeiden, wird von der Schrift EP 3 094 008 B1 ein Verfahren zur Datenübertragung über eine elektrische Leitung vorgeschlagen, bei welchem in einer Sendereinheit die Daten mittels eines Bandspreizverfahrens gespreizt werden. Die gespreizten Daten werden auf ein Grundsignal aufmoduliert, mit welchem die elektrische Energie in der elektrischen Leitung übertragen wird. In einer Empfangseinheit werden dann die Daten mittels Demodulation und Entspreizung wieder zurückgewonnen. Da die Daten mithilfe der Spreizung mit erhöhter Bandbreite übertragen werden können, kann die Übertragung mit einem niedrigeren Signalpegel erfolgen und damit die Abstrahlung des Signals und ein Übersprechen auf benachbarte Leitungen reduziert werden. Allerdings wirken sich elektrische Störungen auf der Leitung und Dämpfungseffekte weiterhin negativ auf die Datenübertragung aus. Um diese auszugleichen, sind z.B. aufwendige und meist kostenintensive Filtermaßnahmen notwendig.

Weiterhin beschreibt die Schrift EP 3 165 315 A1 ein Verfahren zur Kommunikation in einem Schweißsystem, insbesondere zwischen einer Stromquelle und einem Drahtvorschub des Schweißsystems, über das Stromversorgungskabel, bei welchem Spannungs- und Strompulse für einen Datenaustausch genutzt werden. Für die Kommunikation werden dabei senderseitig (z.B. vom Drahtvorschub) Stromaufnahmepulse in einem vorgegebenen Format oder Muster variiert, welches z.B. einen binären Code repräsentiert. Dieser Code wird empfängerseitig (z.B. in der Stromquelle) von einer entsprechenden Steuereinheit ausgewertet. Bei diesem Verfahren wird kein Kommunikationsprotokoll verwendet und die Übertragung der Information über das Stromkabel erfolgt in einem niederfrequenten Bereich (z.B. 10 Hz bis 10 kHz), wodurch das Verfahren zumindest gegenüber Störungen, wie z.B. Übersprechen, robuster und stabiler ist. Allerdings beeinflussen auch hier elektrische Störungen in der Leitung, welche z.B. durch das Schweißgerät oder den Schweißprozess verursacht werden, die Datenübertragung. So können z.B. durch elektrische Störungen die Muster der Spannungs- und Stromimpulse verändert, verzerrt oder unkenntlich gemacht werden, so dass die übertragenen Daten empfängerseitig kaum bis gar nicht auswertbar sind.

### Darstellung der Erfindung

Der Erfindung liegt daher die Aufgabe zugrunde, ein Verfahren sowie ein zugehöriges System zur Datenübertragung auf elektrischen Leitungen anzugeben, welche durch elektro-magnetischen Störungen und elektrischen Störeinflüssen in der Leitung weitgehend unbeeinflusst sind und eine hohe Robustheit und Stabilität aufweisen.

Diese Aufgabe wird durch ein Verfahren sowie ein System gemäß den unabhängigen Ansprüchen gelöst. Vorteilhafte Ausführungsformen der vorliegenden Erfindung sind in den abhängigen Ansprüchen beschrieben.

Erfindungsgemäß erfolgt die Lösung der Aufgabe durch ein Verfahren zur Datenübertragung auf elektrischen Leitungen. Dabei wird eine elektrische Leitung, über welche elektrische Energie zwischen einer Stromquelle und zumindest einer Stromsenke übertragen wird, zusätzlich für eine Datenübertragung zwischen der Stromquelle und der zumindest einen Stromsenke genutzt. Dabei wird für die Datenübertragung zwischen der Stromquelle und der zumindest einen Stromsenke zumindest eine Schallwelle von einer senderseitigen Koppeleinheit in die elektrische Leitung eingekoppelt. Die zumindest eine Schallwelle wird dann zumindest teilweise zeitgleich zur elektrischen Energie in der elektrischen Leitung übertragen. Empfängerseitig wird die zumindest eine Schallwelle von einer empfängerseitigen Koppeleinheit aus der elektrischen Leitung ausgekoppelt und es werden die übertragenen Daten aus der zumindest einen Schallwelle zurückgewonnen.

Der Hauptaspekt der vorgeschlagenen Lösung besteht darin, dass eine elektrische Leitung zwischen einer Stromquelle (z.B. Schweißstromquelle, Photovoltaik-Modul, Batterieladegerät, etc.) und zumindest einer Stromsenke (z.B. Schweißgerät, Schweißkomponente, Wechselrichter, Batterieeinheit, etc.) nicht nur zur Übertragung elektrischer Energie, sondern als Festkörper auch zur Übertragung zumindest einer Schallwelle genutzt wird. Mit der zumindest einen Schallwelle werden Daten (z.B. Steuer- und/oder Regelsignale, Informationen, Sensor- und/oder Messdaten, etc.) mit angepasster bzw. benötigter, d.h. mit niedriger oder auch mit hoher Geschwindigkeit zwischen der Stromquelle und der zumindest einen Stromsenke übertragen. Damit werden elektromagnetische und/oder elektrische Störeinflüsse (z.B. Übersprechen, Störungen durch die Stromquelle und/oder eine Stromsenke) auf die Datenübertragung weitgehend umgangen.

Die Übertragung der zumindest einen Schallwelle erfolgt dabei mindestens teilweise zeitgleich bzw. mindestens in einem Teil eines selben Zeitintervalls, in welche die elektrische Energie über die elektrische Leitung übertragen wird. Das bedeutet, die Übertragung der elektrischen Energie und der zumindest einen Schallwelle zur Datenübertragung in der elektrischen Leitung überlappen einander zumindest teilweise zeitlich. Allerdings ist die Übertragung der Schallwelle und damit der Daten von elektro-magnetischen und/oder elektrischen Störungen in der elektrischen Leitung kaum bis überhaupt nicht beeinflusst und kann z.B. auch dann erfolgen, wenn z.B. die elektrische Verbindung zwischen der Stromquelle und der zumindest einen Stromsenke unterbrochen ist. Das Verfahren zur Datenübertragung bietet damit den Vorteil, dass für die Datenübertragung eine bereits bestehende, elektrische Verbindung bzw. Leitung verwendet werden kann und die Datenübertragung zusätzlich eine hohe Stabilität und Robustheit aufweist.

Eine zweckmäßige Ausgestaltung der Erfindung sieht vor, dass die zu übertragenden Daten von der senderseitigen Koppeleinheit mittels eines Modulationsverfahrens der zumindest einen Schallwelle eingeprägt werden. Von der empfängerseitigen Koppeleinheit werden die übertragenen Daten dann idealerweise mittels Demodulation wieder aus der zumindest einen Schallwelle zurückgewonnen. Die senderseitige Koppeleinheit und empfängerseitige Koppeleinheit sind vorteilhafterweise dazu eingerichtet, die zu übertragenden Daten mittels des Modulationsverfahrens der zumindest einen Schallwelle einzuprägen bzw. die übertragenen Daten mittels entsprechender Demodulation wieder aus der zumindest eine Schallwelle zurückzugewinnen.

Dabei kommt als Modulationsverfahren bevorzugterweise ein Pulsmodulationsverfahren zum Einsatz, wie z.B. eine Pulsfrequenzmodulation, eine Pulsweitenmodulation oder eine Pulspausenmodulation. Ferner wären aber auch eine Amplitudenmodulation oder eine Frequenzmodulation der zumindest einen Schallwelle als Trägerwelle zu nutzen, um die zu übertragenden Daten der zumindest einen Schallwelle einzuprägen. Weiterhin kann als Modulationsverfahren auch eine so genannte Frequenzumtastung oder sogenanntes Frequency Shift Keying (kurz: FSK) verwendet werden, bei welchem eine Trägerfrequenz einer periodischen sinusförmigen Schwingung zwischen einem Satz unterschiedlicher Frequenzen verändert wird, welche einzelne Sendesymbole darstellen. FSK dient vor allem einer Übertragung von Digitaldaten oder -signalen. Idealerweise kann das jeweils verwendete Modulationsverfahren in Abhängigkeit von Rahmenbedingungen, wie z.B. Datenrate der zu übertragenden Daten, möglicherweise auftretenden Störungen, Übertragungsleistung der genutzten elektrischen Leitung, etc. bestimmt werden, um eine optimale Übertragung der jeweiligen Daten zu ermöglichen.

Vorteilhafterweise wird die zumindest eine Schallwelle in die elektrische Leitung piezoelektrisch eingekoppelt und ausgekoppelt. Um die Schallwelle in die elektrische Leitung piezoelektrisch ein- bzw. auszukoppeln, sind die senderseitige und die empfängerseitige Koppeleinheit als piezoelektrische Transducer oder piezoelektrische Wandler ausgestaltet.

Alternativ können ein Einkoppeln und Auskoppeln der zumindest einen Schallwelle in die elektrische Leitung elektromagnetisch erfolgen. Dazu sind die senderseitige und die empfängerseitige Koppeleinheit als elektromagnetischer Schallwandler oder Electromagnetic Acoustic Transducer ausgestaltet.

Weiterhin ist es vorteilhaft, wenn für die zumindest eine Schallwelle eine Schallwelle aus dem Ultraschallbereich verwendet wird. Insbesondere wird eine Schallwelle aus einem Frequenzbereich von 20 kHz bis 100 MHz, bevorzugt aus dem Frequenzbereich von 20 kHz bis 10 MHz, verwendet.

Die Lösung der genannten Aufgabe erfolgt weiterhin durch ein System zur Datenübertragung auf elektrischen Leitungen, wobei eine elektrische Leitung eine Stromquelle und zumindest eine Stromsenke verbindet und zwischen der Stromquelle und der zumindest einen Stromsenke zusätzlich zu elektrischer Energie Daten überträgt. Dabei sind Koppeleinheiten vorgesehen, wobei der Stromquelle und der zumindest einen Stromsenke jeweils eine Koppeleinheit zugeordnet ist. Die jeweiligen Koppeleinheiten sind dazu eingerichtet, als senderseitige Koppeleinheit für eine Übertragung von Daten zwischen der Stromquelle und der zumindest einen Stromsenke in die elektrische Leitung zumindest eine Schallwelle einzukoppeln und/oder als empfängerseitige Koppeleinheit die zumindest eine Schallwelle auszukoppeln und aus der zumindest einen Schallwelle die übertragenen Daten zurückzugewinnen. Die Koppeleinheiten können dabei als eigenständige Einheiten ausgestaltet sein oder die jeweils zugeordnete Koppeleinheit ist idealerweise in die Stromquelle und/oder in die Stromsenke integriert.

Vorteilhafterweise können die Koppeleinheiten derart ausgestaltet sein, dass eine jeweilige Koppeleinheit sowohl als senderseitige Koppeleinheit als auch empfängerseitige Koppeleinheit verwendbar ist. Das bedeutet, die jeweilige Koppeleinheit kann sowohl als Sender als auch als Empfänger von zu übertragenden Daten fungieren. Das System zur Datenübertragung ist damit dazu eingerichtet, die Daten zwischen der Stromquelle und der zumindest einen Stromsenke über eine Leitung bidirektional zu übertragen. Damit kann z.B. eine bereits vorhandene, elektrische Leitung sowohl für eine Datenübertragung von der Stromquelle zur zumindest einen Stromsenke als auch für eine Datenübertragung von der zumindest einen Stromsenke zur Stromquelle genutzt werden.

Weiterhin weist das System zur Datenübertragung zumindest eine elektrische Leitung auf, welche dazu geeignet ist, zumindest teilweise zeitgleich zur elektrischen Energie auch zumindest eine Schallwelle zu übertragen. Als elektrische Leitung ist dabei jegliche elektrische Verbindung zwischen einer Stromquelle und zumindest einer Stromsenke zur elektrischen Energieübertragung verwendbar, wie z.B. Verbindungen über massive elektrische Leiter oder Leiter in Litzenform. Als elektrische Leitung ist beispielsweise auch ein isolierter Leiter bzw. Kabel, beispielsweise mit einer oder mehreren Adern, nutzbar. Es können aber auch andere üblicherweise niederohmige, elektrisch leitende Verbindungen, welche zur Übertragung von elektrischer Energie geeignet sind, wie z.B. elektrische Verbindungen zwischen elektrischen Bauelementen (z.B. Widerstände, Induktivitäten, Kapazitäten, Dioden, Transistoren, integrierte Schaltungen), welche z.B. auf einer Leiterplatte angebracht sind, gegebenenfalls auch in Kombination mit zumindest einem elektrischen Bauteil (z.B. Widerstand, Induktivität, etc.) als elektrische Leitung verwendet werden.

### Kurzbeschreibung der Figuren

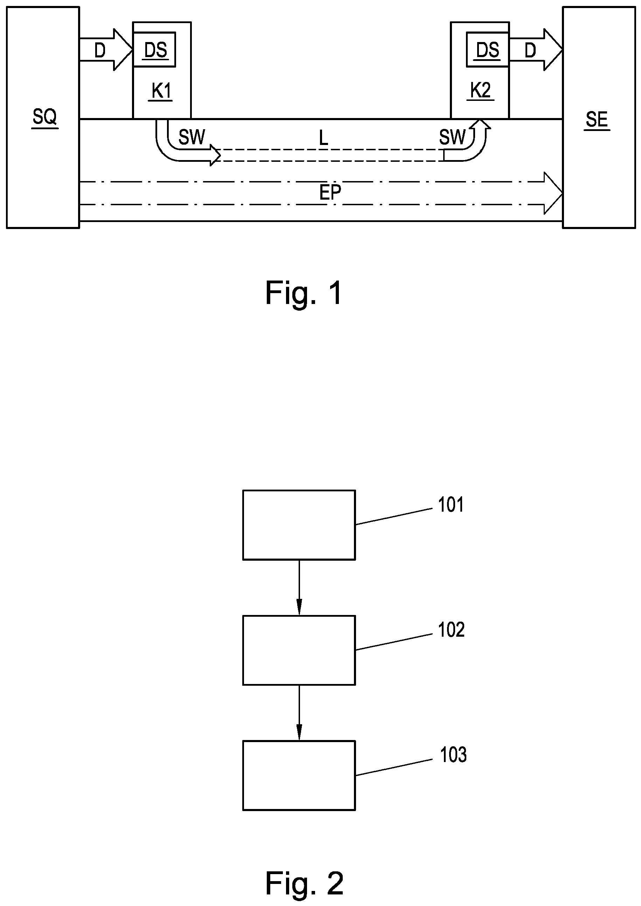

Die gegenständliche Erfindung wird nachfolgend unter Bezugnahme auf die Figuren 1 und 2 näher erläutert, die beispielhaft, schematisch und nicht einschränkend vorteilhafte Ausgestaltungen der Erfindung zeigen. Dabei zeigt
Fig.1 ein System zur Durchführung des erfindungsgemäßen Verfahrens zur Datenübertragung auf elektrischen Leitungen
Fig. 2 einen Ablauf des erfindungsgemäßen Verfahrens zur Datenübertragung auf elektrischen Leitungen

### Ausführung der Erfindung

Figur 1 zeigt beispielhaft und schematisch eine Stromquelle SQ, wie z.B. eine Schweißstromquelle für ein Schweißgerät, und eine Stromsenke SE, wie z.B. eine Schweißkomponente, insbesondere einen Drahtvorschub oder einen Schweißbrenner. Die Stromquelle SQ könnte beispielsweise auch ein Ladegerät sein, welches Strom und/oder Spannung während eines Ladeprozess von aufladbaren Batteriemodulen steuert. Dabei wäre die Stromsenke SE zumindest ein aufladbares Batteriemodul. Weiterhin wäre es denkbar, dass Stromquelle SQ und Stromsenke SE beispielsweise zumindest ein Photovoltaikmodul und ein Wechselrichter sind, welcher einen vom zumindest einen Photovoltaikmodul produzierten Gleichstrom in nutzbaren Wechselstrom umsetzt und gegebenenfalls eine Zwischenspeicherung in einem Batteriemodul ermöglicht.

Die Stromquelle SQ und die Stromsenke SE sind über eine elektrische Leitung L miteinander verbunden, wobei die Stromquelle SQ die Stromsenke SE über die Leitung L mit elektrischer Energie EP versorgt. Die Stromquelle SQ kann allerdings auch mit mehr als einer Stromsenke SE mittels elektrischer Leitungen L verbunden sein und diese mit elektrischer Energie versorgen.

Weiterhin erfolgt zwischen der Stromquelle SQ und der Stromsenke SE beispielsweise für Steuerzwecke, für eine Regelung, etc. ein Informationsaustausch mittels Daten D. Dabei können beispielsweise die Daten D unidirektional von der Stromquelle SQ zur Stromsenke SE oder von der Stromsenke SE zur Stromquelle SQ übertragen werden. Die Datenübertragung kann aber auch bidirektional erfolgen, indem z.B. von der Stromquelle SQ Daten D (z.B. Steuer- oder Regelsignale, etc.) zur Stromsenke SE übertragen werden und von der Stromsenke SE entsprechenden Daten D (z.B. Informationen, Messdaten, Sensordaten, etc.) an die Stromquelle SQ übermittelt werden.

Für eine Übertragung von Daten D ist sowohl der Stromquelle SQ als auch der Stromsenke SE jeweils eine Koppeleinheit K1, K2 zugeordnet. Dabei kann die jeweils zugeordnete Koppeleinheit K1, K2 beispielsweise als von der Stromquelle SQ und/oder Stromsenke SE getrennte Einheit ausgeführt sein oder in die Stromquelle SQ und/oder Stromsenke SE integriert sein. So kann die Koppeleinheit K1, K2 beispielsweise in einer Buchse angeordnet sein, in welche die elektrische Leitung L bei der Stromquelle SQ und/oder der Stromsenke SE eingesteckt ist. Es ist aber auch denkbar, dass die Koppeleinheit K1, K2 in einer Steckereinheit angebracht ist, mit welcher die elektrische Leitung L mit der Stromquelle SQ bzw. der Stromsenke SE verbunden ist. Ist die Koppeleinheit K1, K2 als eigenständige Einheit ausgeführt, so kann die Koppeleinheit K1, K2 z.B. an der elektrischen Leitung L in jeweiliger Nähe der zugeordneten Stromquelle SQ bzw. Stromsenke SE angeordnet sein. Dabei sollte zumindest eine Verbindung zwischen der jeweiligen Koppeleinheit K1, K2 und der zugeordneten Stromquelle SQ bzw. Stromsenke SE bestehen, über welche die zu übertragenden Daten D ausgetauscht werden können.

Weiterhin sind die Koppeleinheiten K1, K2 dazu eingerichtet, je nachdem ob sie als senderseitige Koppeleinheit K1 bzw. als Sender K1 und/oder als empfängerseitige Koppeleinheit K2 bzw. als Empfänger K2 fungieren, für die Übertragung der Daten D senderseitig zumindest eine Schallwelle SW in die elektrische Leitung L einzukoppeln und/oder die zumindest eine Schallwelle SW empfängerseitig wieder auszukoppeln. Weiterhin ist die empfängerseitige Koppeleinheit K2 dazu eingerichtet, die Daten D aus der zumindest einen in der elektrischen Leitung L übertragenen Schallwelle SW zurückzugewinnen. Weiterhin muss die elektrische Leitung L dazu geeignet sein, mindestens teilweise zeitglich zur elektrischen Energie EP (z.B. Zünden eines Lichtbogens im Schweißgerät, etc.) die zumindest eine Schallwelle SW zu übertragen. Idealerweise können elektrische Leitungen L aus elektrisch leitendem Material als Festkörper neben elektrischer Energie EP Schallwellen bzw. akustische Schwingungen mit einer hohen Geschwindigkeit leiten. So beträgt z.B. bei Kupfer eine Ausbreitungsgeschwindigkeit einer Schallwelle SW in longitudinale Richtung - d.h. in Richtung der Länge der Leitung L zwischen Stromquelle SQ und Stromsenke SE - 4.660 m/s.

Die elektrische Leitung L, welche mindestens teilweise zeitgleich elektrische Energie und eine Schallwelle bzw. akustische Schwingung bzw. Energie überträgt, kann beispielsweise als massiver Leiter oder als Litzenleiter ausgestaltet sein. Idealerweise wird für die elektrische Leitung L Kupfer verwendet. Die elektrische Leitung L kann allerdings auch aus einem anderen elektrisch leitenden Material ausgeführt sein.

Weiterhin kann die elektrische Leitung L sowohl einen massiven Leiter als auch einen Litzenleiter umfassen. Bei dieser Ausführung können beispielsweise auch unterschiedliche, leitende Materialen zum Einsatz kommen. Die elektrische Leitung L kann dabei derart ausgestaltet sein, dass beispielsweise der Litzenleiter auf elektrische Leitfähigkeit bzw. auf eine Übertragung der elektrischen Energie optimiert ist und dass der massive Leiter auf eine akustische Leitfähigkeit bzw. eine Übertragung von Schallwellen optimiert ist. D.h. bei dieser Ausführung der elektrischen Leitung L kann der massive Leiter beispielsweise auch aus einem elektrisch schlecht leitenden oder sogar elektrisch nichtleitenden Material ausgeführt sein, vor allem wenn der massive Leiter im Wesentlichen hauptsächlich oder fast ausschließlich eine Funktion als akustischer Leiter innehat.

Im Fall von Schweißanwendungen - d.h. die Stromquelle SQ ist z.B. eine Schweißstromquelle und die Stromsenke SE ist z.B. eine Schweißkomponente (z.B. Drahtvorschub oder Schweißbrenner) - kann es beispielsweise von Vorteil sein, als elektrische Leitungen L elektrische Leitungen L mit Wasserkühlung zu verwenden. Bei einer derartigen Leitung ist beispielsweise ein elektrisch leitfähiges Schweißkabel elektrisch isolierend von Kühlwasser umgeben. Dabei kann beispielsweise das Kühlwasser als Medium für die Übertragung der Daten D mittels der Schallwelle SW genutzt werden.

Weiterhin wäre es denkbar, dass die elektrische Leitung L aus zumindest einer elektrisch leitenden Verbindung besteht, welche auf einer Leiterplatte angeordnete, elektrische Bauelemente (z.B. Widerständen, Induktivitäten, Kapazitäten, Dioden, Transistoren, integrierte Schaltungen, etc.) miteinander verbindet, oder z.B. eine derartige elektrisch leitende Verbindung und gegebenenfalls zumindest eines der elektrischen Bauelemente (z.B. Widerstand, Induktivität, etc.) umfasst. Für die Übertragung der elektrischen Energie werden dabei beispielsweise die elektrischen Verbindungen (z.B. Leiterbahnen aus Kupfer) eingesetzt. Für eine Übertragung der zumindest einen Schallwelle SW könnten beispielsweise die Leiterbahnen, auf der Leiterplatte angeordnete, elektrische Bauteile und/oder gegebenenfalls die Leiterplatte selbst genutzt werden.

In Figur 1 ist der Einfachheit halber beispielhaft eine Datenübertragung von der Stromquelle SQ - z.B. einer Schweißstromquelle - zur Stromsenke SE - z.B. zu einer Schweißkomponente wie z.B. einem Drahtvorschub des Schweißgeräts - dargestellt. D.h. die Koppeleinheit K1, welche der Stromquelle SQ zugeordnet ist, fungiert als senderseitige Koppeleinheit K1 bzw. Sender K1 und die Koppeleinheit K2, welche der Stromsenke SE zugeordnet ist, fungiert als empfängerseitige Koppeleinheit K2 bzw. Empfänger K2. Die Datenübertragung im in Figur 1 dargestellten System kann allerdings auch bidirektional - sowohl von der Stromquelle SQ zur Stromsenke SE als auch von der Stromsenke SE zur Stromquelle SQ - erfolgen. Dabei fungieren die Koppeleinheiten K1, K2 sowohl als senderseitige Koppeleinheit K1 bzw. Sender K1 als auch als empfängerseitige Koppeleinheit K2 bzw. Empfänger K2 und weisen sowohl Sender- als auch Empfängerfunktionen auf.

Als senderseitige Koppeleinheit K1 bzw. Sender K1 ist die jeweilige Koppeleinheit K1, K2 dazu eingerichtet, für die Übertragung der Daten D zumindest eine Schallwelle SW in die elektrische Leitung L einzukoppeln. Weiterhin kann die senderseitige Koppeleinheit K1 die zu übertragenden Daten D z.B. der Stromquelle SQ mittels Modulation - wie z.B. mittels Pulsmodulation, insbesondere mittels Pulspausen-, Pulsweiten- oder Pulsfrequenzmodulation - der zumindest einen Schallwelle SW einprägen. Dazu weist die senderseitige Koppeleinheit K1 eine entsprechende Datenschnittstelle DS auf, über welche die zu übertragenden Daten D von einer sendenden Einheit - z.B. der Stromquelle SQ - zur Verfügung gestellt werden. Je nach Randbedingungen (z.B. zu übertragender Daten, zu übertragender Datenrate, Übertragungsleistung, auftretender Störungen, etc.) können aber auch andere Modulationsverfahren, wie z.B. Amplitudenmodulation, Frequenzmodulation, Frequenzumtastung, etc. genutzt werden, um eine optimale Datenübertragung zu gewährleisten.

Als empfängerseitige Koppeleinheit K2 bzw. Empfänger K2 kann die jeweilige Koppeleinheit K1, K2 die zumindest eine Schallwelle SW, welche von der elektrischen Leitung L zusätzlich bzw. weitgehend gleichzeitig mit der elektrischen Energie EP übertragen wird, aus der Leitung L auskoppeln und die übertragenen Daten D empfängerseitig zurückgewinnen. Die Daten D werden beispielsweise mittels entsprechender Demodulation aus der zumindest einen Schallwelle SW zurückgewonnen. Dazu weist die empfängerseitige Koppeleinheit K2 ebenfalls eine entsprechende Datenschnittstelle DS auf, über welche dann die Daten D der empfangenden Einheit - z.B. der Stromsenke SE - zur Verfügung gestellt werden können. Weiterhin kann die Koppeleinheit K1, K2 für die Funktion als Empfänger K2 eine Verstärkereinheit aufweisen, um beispielsweise die über die Leitung L empfangene Schallwelle SW vor der Demodulation zu verstärken.

Als Koppeleinheiten K1, K2 können beispielsweise piezoelektrische Wandler oder piezoelektrische Transducer verwendet werden. Bei einem piezoelektrischen Transducer wird durch Anlegen einer Spannung an einen Piezokristall eine Verformung des Piezokristalls bewirkt. Durch die Verformung des Kristalls kann in einem elastischen Medium eine wellenförmige Ausbreitung von Druck- und Dichteschwankungen - d.h. eine Schallwelle - erzeugt werden. Dies kann mit sehr hohen Frequenzen passieren, wodurch in das Medium, z.B. die elektrische Leitung L, eine Schallwelle im Ultraschallbereich - d.h. in einem Frequenzbereich von 20 kHz bis 100 MHz, bevorzugt in einem Frequenzbereich von 20 kHz bis 10 MHz - senderseitig eingekoppelt wird. Empfängerseitig wird die Schallwelle bzw. die empfangenen Druck- und Dichteschwankungen vom piezoelektrischen Transducer z.B. wieder in eine Spannung umgesetzt. Dadurch kann der piezoelektrische Transducer als senderseitige Koppeleinheit K1 und als empfängerseitige Koppeleinheit K2 eingesetzt werden. Um eine piezoelektrischen Transducer als Koppeleinheit K1, K2 einsetzen zu können, muss allerdings ein direkter Kontakt zum elektrisch leitenden Teil der elektrischen Leitung L hergestellt werden. D.h. es darf sich z.B. für das Einkoppeln und Auskoppeln der Schallwelle SW keine Isolierung zwischen der elektrischen Leitung L und dem als Koppeleinheit K1, K2 genutzten piezoelektrischen Transducer befinden.

Alternativ können die Koppeleinheiten K1, K2 als elektromagnetische Schallwandler oder so genannte Electromagnetic Acoustic Transducer (kurz: EMAT) ausgeführt sein. Ein EMAT funktioniert über eine Spule in Kombination mit einem Magneten, wobei die Spule mit einem Wechselspannungssignal beaufschlagt wird. Ein dadurch entstehendes, relativ hochfrequentes elektromagnetisches Feld bewirkt beispielsweise in einem metallischen Gegenstand, wie z.B. in der elektrischen Leitung L Wirbelströme. Durch Interaktion mit einem statischen oder niederfrequenten Magnetfeld, welches vom Magneten (z.B. Neodymmagnet) erzeugt wird, entstehen im Metall bzw. in der elektrischen Leitung L durch die Lorentzkraft mechanische bzw. akustische Schwingungen bzw. eine Schallwelle SW, üblicherweise im Ultraschallbereich. In einem reziproken Prozess induziert eine elastische Welle, wie z.B. seine Schallwelle, in Anwesenheit eines Magnetfeldes Ströme in der Spule des EMAT. Der EMAT kann damit sowohl als Sender K1 als auch Empfänger K2 fungieren. Die Schallwelle SW kann beispielsweise durch eine verwendete Spulen-Geometrie und eine Magnetausrichtung bzw. -polarisation festgelegt werden. Je nach Spulen-Geometrie und Magnetausrichtung kann die Schallwelle SW eine Longitudinalwelle mit einer Schwingungsrichtung in Ausbreitungsrichtung oder eine Transversalwelle mit einer Schwingungsrichtung senkrecht zur Ausbreitungsrichtung sein.

Der EMAT als Koppeleinheit K1, K2 bietet allerdings bei Verwendung mehrerer Spulen mit verschiedenen Geometrien auch die Möglichkeit mehrere Schallwellen SW in die elektrische Leitung L einzukoppeln und damit parallel unterschiedliche Daten z.B. mittels Überlagerung von Schwingungen zu übertragen. Bei Verwendung von Longitudinalwellen müssen beispielsweise für die Überlagerung unterschiedliche Frequenzen verwendet werden, da die Wellen dieselbe Ausbreitungsrichtung aufweisen. Auch bei Verwendung von Transversalwellen können unterschiedliche Frequenzen bei der Überlagerung verwendet werden. Allerdings können bei Verwendung von Transversalwellen aufgrund der zur Ausbereitungsrichtung senkrechten Schwingungsrichtung der jeweiligen Welle auch unterschiedliche Ausrichtungen genutzt werden. Weiterhin kann das Ein- und Auskoppeln der Schallwelle SW mit EMATs als Koppeleinheiten K1, K2 auch über eine Isolierung der elektrischen Leitung L erfolgen.

Figur 2 zeigt schematisch einen beispielhaften Ablauf des Verfahrens zur Datenübertragung in einer elektrischen Leitung L zwischen einer Stromquelle SQ und einer Stromsenke SE mit einem in Figur 1 beispielhaft dargestellten System. Die Übertragung der Daten D kann mit dem Verfahren sowohl unidirektional als auch bidirektional auf der Leitung L erfolgen.

Dazu werden in einem Einkoppelschritt 101 die zu übertragenden Daten D z.B. von der Stromquelle SQ an die senderseitige Koppeleinheit K1 weitergeleitet. Die Koppeleinheit K1 weist dazu eine Datenschnittstelle DS auf. Von der senderseitigen Koppeleinheit K1 wird dann für die Übertragung der Daten im Einkoppelschritt 101 zumindest eine Schallwelle SW in die elektrische Leitung L, welche die Stromquelle SQ mit der Stromsenke SE verbindet, eingekoppelt. Die Einkopplung kann beispielsweise piezoelektrisch oder elektromagnetisch erfolgen -je nachdem ob als senderseitige Koppeleinheit K1 ein piezoelektrischer Transducer oder ein EMAT eingesetzt wird.

Die zu übertragenden Daten werden der zumindest einen Schallwelle SW mittels eines Modulationsverfahrens von der senderseitigen Koppeleinheit K1 im Einkoppelschritt 101 eingeprägt. Als Modulationsverfahren kann beispielsweise ein Pulsmodulationsverfahren, insbesondere eine Pulsfrequenzmodulation, eine Pulsweitenmodulation oder eine Pulspausenmodulation, verwendet werden. D.h. die zu übertragenden Daten werden in Form von Pulsen eingebracht, wobei die Dateninformation beispielsweise mittels einer Frequenz der Pulse, durch die Pulse selbst (z.B. Pulsweite bzw. -dauer) oder als Pausendauer zwischen aufeinanderfolgenden Pulsen übermittelt wird. Alternativ könnte als Modulationsverfahren auch eine Frequenzmodulation, bei welcher eine Trägerfrequenz durch das zu übertragende Signal verändert wird, eine Amplitudenmodulation, bei welcher eine Amplitude einer Trägerfrequenz durch das zu übertragende Signal, oder durch Frequenzumtastung, welche z.B. bei Digitalsignalen zur Anwendung kommt, verwendet werden.

Nach dem Einkoppeln der zumindest einen Schallwelle SW in die elektrische Leitung L wird in einem Übertragungsschritt 102 die Schallwelle SW in der elektrischen Leitung L zusätzlich und weitgehend gleichzeitig zur elektrischen Energie EP von der senderseitigen Koppeleinheit K1 bzw. der Stromquelle SQ zur empfängerseitigen Koppeleinheit K2 bzw. zur Stromsenke SE übertragen.

Empfängerseitig wird dann in einem Auskoppelschritt 103 die zumindest eine Schallwelle SW von der empfängerseitigen Koppeleinheit K2 aus der elektrischen Leitung L ausgekoppelt. Als empfängerseitige Koppeleinheit K2 kann ebenfalls als piezoelektrischer Transducer oder als EMAT ausgeführt sein und die von der elektrischen Leitung L übertragene Schallwelle SW piezoelektrisch oder elektromagnetisch auskoppeln. Nach dem bzw. beim Auskoppeln der zumindest einen Schallwelle SW werden im Auskoppelschritt 103 die übertragenen Daten D von der empfängerseitigen Koppeleinheit K2 mittels Demodulation aus der Schallwelle SW zurückgewonnen. Dazu wird die zumindest eine Schallwelle SW von der empfängerseitigen Koppeleinheit K2 in eine elektrische Signalwelle umgewandelt, welche mit gängigen Methoden der Signalverarbeitung decodiert wird. Die Datenrückgewinnung kann dabei beispielsweise aus den übermittelten Schallwellenpulsen (z.B. Pulsweite bzw. -dauer), der Frequenz dieser Pulse oder den Pulspausen zwischen den Pulsen erfolgen. Bei anderen Modulationsverfahren, wie z.B. Frequenzmodulation, Amplitudenmodulation, etc. können die übertragenen Daten D beispielsweise aus der Frequenz- oder Amplitudenänderung der Trägerfrequenz ermittelt werden.

Vor der Rückgewinnung der Daten D kann die empfangene Schallwelle SW in der empfängerseitigen Koppeleinheit K2 beispielsweise noch verstärkt werden. Die zurückgewonnenen Daten D können dann über die Datenschnittstelle DS der empfängerseitigen Koppeleinheit K2 im Auskoppelschritt 103 an die Stromsenke SE für eine weitere Informationsverarbeitung weitergeleitet werden.

Für die Durchführung des Verfahrens wird idealerweise eine Schallwelle SW aus dem Ultraschallbereich verwendet. Insbesondere wird eine Schallwelle SW aus einem Frequenzbereich von 20kHz bis 100 MHz, bevorzugt aus einem Frequenzbereich von 20 kHz bis 10 MHz, verwendet. Insbesondere dieser Frequenzbereich kann mit piezoelektrischen Transducern oder EMATs als Koppeleinheiten K1, K2 abgedeckt werden.

Neben der Übertragung von Daten D kann das Verfahren sowie das zugehörige System auch dazu eingesetzt werden, einen mechanischen Zustand einer elektrischen Leitung L, insbesondere eines elektrischen Leiters L oder Kabels L zu überprüfen. So können sich beispielsweise bei einer Schweißanwendung unter üblichen Betriebsbedingungen Fahrzeuge, wie z.B. Stapler, Flurförderfahrzeuge, etc. über einen elektrischen Leiter L, welcher z.B. eine Schweißstromquelle SQ mit zumindest einer Schweißkomponente als Stromsenke SE verbindet, hinwegbewegen und den Leiter L zumindest temporär mechanisch stark belasten. Insbesondere bei Verwendung von Leitern L in Litzenform kann eine derartige mechanische Beanspruchung zu Brüchen von zumindest einzelnen Litzen im Leiter L führen. Beim oben beschriebenen Verfahren, bei welchem mindestens teilweise zeitgleich zur elektrischen Energie auch zumindest einen Schallwelle SW über den Leiter L übertragen wird, würden beispielsweise bei Litzenbrüchen Rück-Reflexionen der Schallwelle SW auftreten. Je mehr Litzenbrüche im elektrischen Leiter L vorhanden sind, umso mehr Rück-Reflexionen würden an den Bruchstellen im Leiter L auftreten und desto geringer wäre die Übertragung der zumindest einen Schallwelle SW über den Leiter L. Um den mechanischen Zustand des elektrischen Leiters L beurteilen zu können, können beispielsweise eine Stärke der Transmission der zumindest einen Schallwelle SW und/oder eine Stärke der auftretenden Rück-Reflexionen genutzt werden. Weiterhin könnte beispielsweise eine Zeitdauer zwischen einer Aussendung der zumindest einen Schallwelle SW durch die senderseitige Koppeleinheit K1 und einer anschließend detektierten Rück-Reflexion der zumindest einen Schallwelle SW durch die senderseitige Koppeleinheit K1 ermittelt werden, um z.B. eine Position einer Litzenbruchstelle im elektrischen Leiter zu bestimmen.

Weiterhin könnte das Prinzip einer akustischen Kommunikation des Verfahrens - unabhängig von einer elektrischen Leitung L - auch an z.B. nichtleitenden Festkörpern angewendet werden. Derartige Festkörper könnten z.B. Festkörper aus isolierenden Werkstoffen, wie z.B. Keramiken, Kunststoffen, Gläsern, etc. sein.

Weiterhin wäre es denkbar, das Verfahren für eine interne Kommunikation in einem Gerät (z.B. Schweißgerät, Batterieladegerät, Solarwechselrichter) zu nutzen, wobei z.B. die Übertragung von Daten mittels zumindest einer Schallwelle erfolgt, welche z.B. durch elektrisch leitende Leitungen L oder isolierende Festkörper übertragen wird. Generell kann angemerkt werden, dass auf Grund von Dämpfungseffekten geringere Übertragungslängen und eine hohe Steifigkeit eines Festkörpers für die akustische Datenübertragung über einen Festkörper vorteilhaft sind. Dabei könnte beispielsweise eine Leiterplatte im Gerät als Festkörper für die akustische Übertragung von Daten D genutzt werden. Dazu könnte die Leiterplatte z.B. an einer ersten Oberfläche eine EMAT-Antennenstruktur und darunterbeispielweise auf zumindest einer der inneren Schichten der Leiterplatte - eine leitfähige Struktur aufweisen. Über der EMAT-Antennenstruktur kann z.B. eine Magneteinheit angebracht sein, welche mit der EMAT-Antennenstruktur z.B. die senderseitige Koppeleinheit K1 bildet und durch welche beispielsweise eine akustische Schallwelle SW in der Leiterplatte erzeugt wird. Dementsprechend könnte an einer anderen Position der Leiterplatte ein vergleichbarer Aufbau - d.h. EMAT-Struktur und Magneteinheit - als empfängerseitige Koppeleinheit K2 vorgesehen sein, von welcher die Schallwelle SW mit den zu übertragenden Daten D z.B. wieder in ein elektrisches Signal rückgewandelt wird.

Weiterhin kann mittels der akustischen Übertragung gemäß dem oben beschriebenen Verfahren Daten D ebenso über optische oder induktive Isolierstrecken ausgetauscht werden.

### Bezugszeichenliste

### Figur 1

- SQ: Stromquelle
- L: elektrische Leitung
- SE: Stromsenke
- K1: senderseitige Koppeleinheit
- K2: empfängerseitige Koppeleinheit
- D: zu übertragende Daten
- DS: Datenschnittstelle
- SW: Schallwelle

### Figur 2

- 101: Einkoppelschritt
- 102: Übertragungsschritt
- 103: Auskoppelschritt

## Patentansprüche

1. Verfahren zur Datenübertragung auf elektrischen Leitungen, wobei eine elektrische Leitung (L), in welcher elektrische Energie (EP) zwischen einer Stromquelle (SQ) und zumindest einer Stromsenke (SE) übertragen wird, zusätzlich für eine Datenübertragung zwischen der Stromquelle (SQ) und der zumindest einen Stromsenke (SE) verwendet wird, ***dadurch gekennzeichnet, dass*** für eine Übertragung von Daten (D) zwischen der Stromquelle (SQ) und der zumindest einen Stromsenke (SE) zumindest eine Schallwelle (SW) von einer senderseitigen Koppeleinheit (K1) in die elektrische Leitung (L) eingekoppelt wird (101), ***dass*** die zumindest eine Schallwelle (SW) mindestens teilweise zeitgleich zur übertragenen, elektrischen Energie (EP) in der elektrischen Leitung (L) übertragen wird (102), ***und dass*** die zumindest eine Schallwelle (SW) von einer empfängerseitigen Koppeleinheit (K2) aus der elektrischen Leitung (L) ausgekoppelt wird und die übertragenen Daten (D) aus der zumindest einen Schallwelle (SW) zurückgewonnen werden (103).

2. Verfahren nach Anspruch 1, ***dadurch gekennzeichnet, dass*** die zu übertragenden Daten (D) von der senderseitigen Koppeleinheit (K1) mittels eines Modulationsverfahrens der zumindest einen Schallwelle (SW) eingeprägt werden (101).

3. Verfahren nach Anspruch 1 oder 2, ***dadurch gekennzeichnet, dass*** von der empfängerseitigen Koppeleinheit (K2) die zumindest eine Schallwelle (SW) verstärkt wird und die übertragenen Daten (D) mittels Demodulation aus der zumindest einen Schallwelle (SW) zurückgewonnen werden (103).

4. Verfahren nach Anspruch 2 oder 3, ***dadurch gekennzeichnet, dass*** als Modulationsverfahren ein Pulsmodulationsverfahren, insbesondere eine Pulsfrequenzmodulation, eine Pulsweitenmodulation oder eine Pulspausenmodulation, verwendet wird (101).

5. Verfahren nach einem der vorangegangenen Ansprüche, ***dadurch gekennzeichnet, dass*** die zumindest eine Schallwelle (SW) in die elektrische Leitung (L) piezoelektrisch oder elektromagnetisch eingekoppelt (101) und ausgekoppelt wird (103).

6. Verfahren nach einem der vorangegangenen Ansprüche, ***dadurch gekennzeichnet, dass*** für die zumindest eine Schallwelle (SW) eine Schallwelle (SW) aus dem Ultraschallbereich, insbesondere aus einem Frequenzbereich von 20 kHz bis 10 MHz, verwendet wird.

7. System zur Datenübertragung auf elektrischen Leitungen, wobei eine elektrische Leitung (L) eine Stromquelle (SQ) und zumindest eine Stromsenke (SE) verbindet und zwischen der Stromquelle (SQ) und der zumindest einen Stromsenke (SE) zusätzlich zu elektrischer Energie (EP) Daten (D) überträgt, ***dadurch gekennzeichnet, dass*** Koppeleinheiten (K1, K2) vorgesehen sind, wobei der Stromquelle (SQ) und der zumindest einen Stromsenke (SE) jeweils eine Koppeleinheit (K1, K2) zugeordnet ist, ***dass*** die Koppeleinheiten (K1, K2) dazu eingerichtet sind, als senderseitige Koppeleinheit (K1) für eine Übertragung von Daten (D) zwischen der Stromquelle (SQ) und der zumindest einen Stromsenke (SE) in die elektrische Leitung (L) zumindest eine Schallwelle (SW) einzukoppeln und/oder als empfängerseitige Koppeleinheit (K2) die zumindest eine Schallwelle (SW) auszukoppeln und aus der zumindest einen Schallwelle (SW) die übertragenen Daten (D) zurückzugewinnen, ***und dass*** die elektrische Leitung dazu geeignet ist, die zumindest eine Schallwelle (SW) mindestens teilweise zeitgleich zur elektrischer Energie (EP) zu übertragen.

8. System nach Anspruch 7, ***dadurch gekennzeichnet, dass*** die Koppeleinheiten (K1, K2) dazu eingerichtet sind, als senderseitige Koppeleinheit (K1) die zu übertragenden Daten (D) mittels eines Modulationsverfahrens der zumindest einen Schallwelle (SW) einzuprägen.

9. System nach Anspruch 7 oder 8, ***dadurch gekennzeichnet, dass*** die Koppeleinheiten (K1, K2) dazu eingerichtet sind, als empfängerseitige Koppeleinheit (K2) die zu übertragenen Daten (D) mittels Demodulation aus der zumindest eine Schallwelle (SW) zurückzugewinnen.

10. System nach einen der Ansprüche 7 bis 9, ***dadurch gekennzeichnet, dass*** die Koppeleinheiten (K1, K2) sowohl als senderseitige Koppeleinheit (K1) als auch empfängerseitige Koppeleinheit (K2) verwendbar sind.

11. System nach einen der Ansprüche 7 bis 10, ***dadurch gekennzeichnet, dass*** die jeweilige zugeordnete Koppeleinheit (K1, K2) in die Stromquelle (SQ) und/oder in die zumindest eine Stromsenke (SE) integriert ist.

12. System nach einen der Ansprüche 7 bis 11, ***dadurch gekennzeichnet, dass*** die Koppeleinheiten (K1, K2) als piezoelektrische Transducer oder piezoelektrische Wandler ausgestaltet sind.

13. System nach einen der Ansprüche 7 bis 11, ***dadurch gekennzeichnet, dass*** die Koppeleinheiten (K1, K2) als elektromagnetischer Schallwandler oder Electromagnetic Acoustic Transducer ausgestaltet sind.

14. System nach einem der Ansprüche 7 bis 13, ***dadurch gekennzeichnet, dass*** das System dazu eingerichtet ist, die Daten (D) zwischen der Stromquelle (SQ) und der zumindest einen Stromsenke (SE) bidirektional zu übertragen.
